# EUROPEAN PATENT APPLICATION

(11) **EP 2 843 397 A1**
(43) Date of publication of application: **04.03.2015**
(21) Application number: 13182641.4
(22) Date of filing: 02.09.2013
(51) Int. Cl.: G01N 22/04

(54) **Microwave resonant cavity humidity sensor**

(71) Applicant: Siemens Aktiengesellschaft, 80333 München (DE)
(72) Inventor: Khodyachykh, Sergiy, 91058 Erlangen (DE); Setzer, Stefan, 90765 Fürth (DE)

(57) **Abstract**

The present invention relates to a microwave resonant cavity humidity sensor (1) for wet steam humidity measurement, comprising a cylindrical cavity (10) with a length and a diameter and a short circuit grid separator element (20) on both sides of the cylindrical cavity, whereas the grid of the short circuit grid separator element (20) is designed such, that the resonant cavity humidity sensor (1) works in a TE₂₁₁ mode and especially for a TE₂₁₁ mode in the range of about 2.9 to 3.0 GHz.

## Description

The present invention relates to a microwave resonant cavity humidity sensor according to claim 1.

Determination of the vapor mass fraction in a two phase liquid-gas mixture is very important and still not fully resolved problem. Especially in the steam supply systems of power plants, an instant knowledge of the vapor mass fraction is mandatory for proving that the steam supply systems or the moisture separators and reheaters are delivering the required quality. The humidity of the wet steam can affect the safety and economy of such steam turbine in great extent. In order to improve the efficiency and operation reliability of such steam turbines, it is necessary to observe the wet steam two-phase flows. For the determination of vapor mass fraction, the requested accuracy typically lies in the range of Δxₛₜ=0.001, where xₛₜ is the mass wetness, which is defined as the quotient of vapor mass and the sum of vapor mass and liquid mass.

During the past mainly chemical methods were applied for the determination of the vapor mass fraction in steam supply systems. Because of its complicity and long analyzing procedure these methods can be used only during commissioning. Another approach is to use calorimetric methods, which allows a relatively good accuracy but on the expense of a limited measuring range. However, the main drawback of such an approach is that the plant must be stopped for carrying out the measurement. So it is not possible to have an online measurement. Alternative acoustic methods are not mature as calorimetric methods and the accuracy of such a system is quite hard to be evaluated only from first principle analyses.

Additionally, high frequency based systems have already been proposed for this type of measurements. The dielectric permittivity of water depends on the physical phase and is thus different for liquid and gaseous phase. The volumetric fraction of each phase can be determined by measuring the dielectric permittivity of the mixture. For known process parameters of the steam turbine, like the temperature or the pressure, it is straight forward to recalculate the volumetric fraction into mass fraction and thus to determine the vapor mass fraction. An approach to measure the dielectric permittivity of the mixture is to use a radio-frequency resonator cavity. For such a cavity, its resonant frequency will vary with the dielectric permittivity of the wet steam, which flows through the cavity. Such techniques are known from Han Zhonghe, Qian Jiangbo: "Study on A Method of Steam Wetness Measurement based on Microwave Resonant Cavity", The Ninth International Conference on Electronic Measurement & Instruments, ICEMI 2009 or from Zhang Shu-e, Liu Lu: "The Error Analysis and Improvement of Microwave Resonant Cavity Method in Steam Turbine Exhaust Wetness Measurement", Department of Electronic and Communication Engineering, North China Electric Power University, IEEE 2010.

Because the wet steam has to be transported through the cavity a special cavity design is required. On the one hand, the wet steam should flow freely through the cavity to ensure the accuracy of sampling and online measurement. On the other hand, both ends of the resonator cavity should be electrical short circuit in order to ensure a higher resonator quality factor. For this reason, both Han Zhonghe and Zhang Shu-e proposed a resonant cavity with a three-ring network separator at each end of the resonator cavity for generating a TE₀₁₁ mode. The wet steam can flow through the resonator cavity from one end to another. The reported accuracy of the vapor mass fraction is below Δxₛₜ=0.003.

It is now an object of the present invention to provide an improved microwave resonant cavity humidity sensor. According to the present invention, this object is achieved with a microwave resonant cavity humidity sensor according to claim 1.

The vapor quality system is based on a resonant cavity with large openings in the side walls on both sides. In respect to the known state of the art cavity design, a different mode was used, namely the TE₂₁₁ mode. This TE₂₁₁ allows a higher quality factor, even if significant parts of the metal in the side walls are reduced to allow for efficient gas flow through the cavity. First results predict that for such a TE₂₁₁ cavity, the Q-factor will reach a value above 2000. For a typical vapor pressure in the range of 10 bar, which is the most conservative case for steam turbines, this reflects in a resolution of the vapor mass fraction in the order of Δxₛₜ=6*10⁻⁵.

The invention now will be explained in more detail with reference to the appended drawings. The drawings show only an example of a practical embodiment of the invention, without limiting the scope of the invention, in which:
- Fig. 1: shows the grid structure of the present invention,
- Fig. 2 and Fig. 3: show alternative measurement arrangements,
- Fig. 4 and Fig. 5: show alternative installations arrangements.

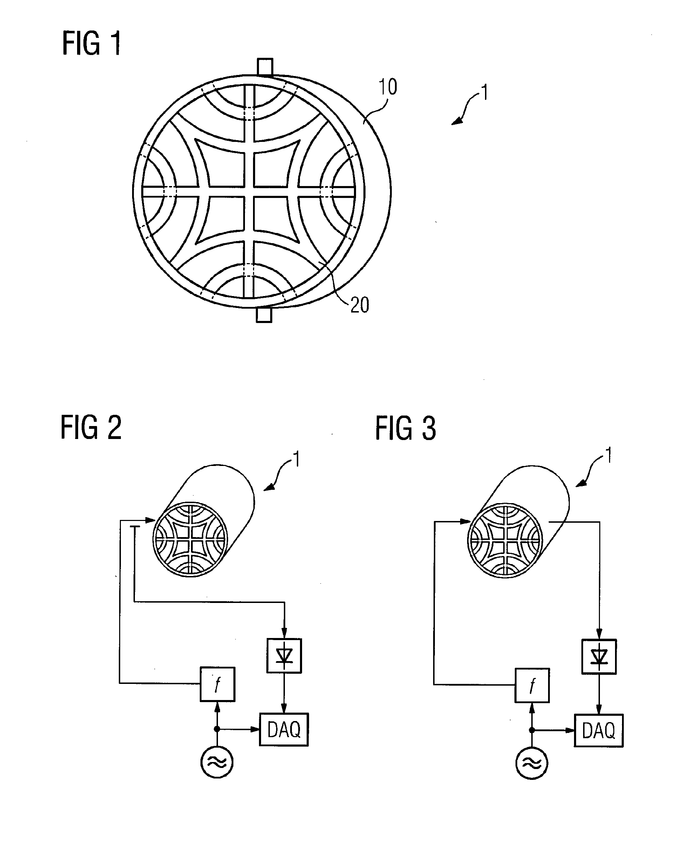

As a finding of the known state of the art resonator cavity design, for a given resonator with a length and a diameter, there always exist a TE₁₁₁ mode with the same frequency of as the TE₀₁₁ mode, which makes the excitation of a pure TE₀₁₁ very difficult. Although the TE₀₁₁ mode has a very high Q-value, it is proposed to use a different mode, namely the TE₂₁₁ mode. The dimensions were chosen to achieve the highest Q-factor for each mode. The TE₂₁₁ mode was finally chosen due to its higher Q-factor compared to the TE₁₁₁ mode. The respective grid of the short circuit grid separator element 20 for such a TE₂₁₁ mode is shown in Fig. 1.

The resonance frequency of the modes can be chosen freely, but in respect to cavity dimensions and the availability of commercially used radio frequency components a frequency in the S-band is an attractive choice. Additionally, the use of a TE₂₁₁ mode in the range of about 2.9 to 3.0 GHz instead of 10 GHz results in larger averaging volume and larger ration of opening-to-grid area as a minimum grid thickness is needed to withstand the vapor pressure on the surfaces. Independent of the chosen mode, the resonance frequency of the cavity can be measured faster than one second and efficiently by reflection and/or transmission measurements.

The resonance frequency of the cavity can be measured by sweeping the drive frequency and detecting the minimum power of the reflected signal as it is shown in Fig. 2. Alternatively, the resonance frequency can be determined by detecting the maximum power of the transmitted signal, if two power couplers are employed in the cavity as it is shown in Fig. 3.

As the frequency dependency of a resonator cavity is known or can be precisely measured on reference system, a mathematical algorithm can be used to fit measurement data and thus speed up the measurement and/or further increase the measurement accuracy by frequency interpolation. Another alternative is to use the frequency dependency of the phase of the reflected or transmitted signals to determine the resonance frequency.

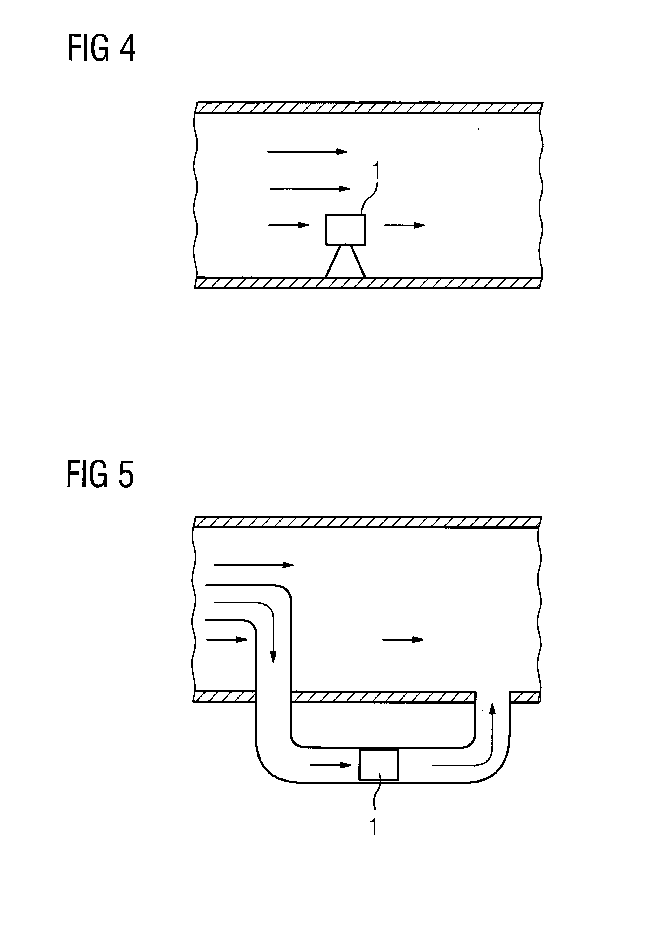

As shown in Fig. 4, the cavity of the microwave resonant cavity humidity sensor 1 can be inserted directly in to the steam pipeline. Alternatively, as shown in Fig. 5, a representative sample of the steam can be taken iso-kinetically from the main pipeline and send through the cavity of the microwave resonant cavity humidity sensor 1.

In all embodiments, the determined resonance frequency is uniquely connected to the vapor mass fraction for a given temperature and pressure range.

## Claims

1. Microwave resonant cavity humidity sensor (1) for wet steam humidity measurement in a steam turbine, comprising a cylindrical cavity (10) with a length and a diameter and a short circuit grid separator element (20) on both end of the cylindrical cavity (10),
**characterized in that**
the grid of the short circuit grid separator element (20) is designed such, that the resonant cavity humidity sensor (1) works in a TE₂₁₁ mode.

2. Microwave resonant cavity humidity sensor (1) according to claim 1,
**characterized in that**
the TE₂₁₁ mode is used in the range of about 2.9 to 3.0 GHz.
